# EUROPÄISCHE PATENTSCHRIFT

(11) **EP 1 139 074 B1**
(45) Veröffentlichungstag und Bekanntmachung des Hinweises auf die Patenterteilung: **18.05.2011**
(21) Anmeldenummer: 01102927.9
(22) Anmeldetag: 08.02.2001
(51) Int. Cl.: G01F 15/00, B25B 23/14

(54) **Messkapsel für Wasserzähler**
Cover for water meter
Couvercle pour compteur d'eau

(30) Priorität: 01.04.2000 DE 20006078 U
(43) Veröffentlichungstag der Anmeldung: 04.10.2001
(73) Patentinhaber: Techem Energy Services GmbH, 65760 Eschborn (DE)
(72) Erfinder: Volz, Stefan, D-63755 Alzenau (DE)
(74) Vertreter: KEIL & SCHAAFHAUSEN Patentanwälte

(56) Entgegenhaltungen:
- DE-U- 29 902 509
- GB-A- 2 246 443
- US-A- 3 191 486
- US-A- 4 663 970
- US-A- 4 811 600
- US-A- 4 995 643
- US-A- 5 256 015

## Beschreibung

Die vorliegende Erfindung betrifft eine Messkapsel, insbesondere für Wasserzähler, mit einem Schraubkopf zur Befestigung der Messkapsel an einem Leitungsstutzen oder dgl. und einer Zählwerkshaube, die in den Schraubkopf einsetzbar ist und drehbar an diesem gehalten wird, wobei der Schraubkopf an der der Zählwerkshaube zugewandten Seite einen Vorsprung zur Verdrehsicherung aufweist.

Messkapseln werden in großer Anzahl in privaten Haushalten und Gewerbebetrieben eingesetzt, um bspw. den Wasserverbrauch genau ermitteln zu können. In festgelegten Zeitabständen müssen diese Messkapseln ausgetauscht werden, damit eine exakte Verbrauchsmessung gewährleistet werden kann. Zusätzlich ist es erforderlich, die Messkapseln wirkungsvoll vor Missbrauch und Manipulation zu schützen.

Herkömmliche Messkapseln bestehen aus einer Zählwerkshaube, in der das Zählwerk untergebracht ist, und einem Schraubkopf, der über einen Gewindeabschnitt bspw. mit einem Leitungsstutzen einer Wasserleitung verbindbar ist und einer Hydraulik (zur Volumenerfassung). Auf der dem Gewinde abgewandten Seite des Schraubkopfes ist die Zählwerkshaube relativ zu dem Schraubkopf drehbar befestigt, wobei der Schraubkopf die Zählwerkshaube teilweise umgreift.

In der Hydraulik ist ein Flügelrad untergebracht, das mit einer magnetischen Kupplung versehen ist. Die Drehbewegung des Flügelrades wird so auf das Zählwerk, das sich in der Zählwerkshaube befindet, übertragen, so dass eine Umdrehung des Flügelrades in der Hydraulik, welche sich im Leitungsstutzen befindet, in dem Zählwerk der Messkapsel angezeigt werden kann.

Das Einschrauben der Messkapsel erfolgt nach dem Stand der Technik über einen speziellen Montageschlüssel, der auf einen Eingreifbereich am Außenumfang des Schraubkopfes abgestimmt ist. Um zu verhindern, dass die Messkapsel zu fest eingeschraubt wird, muss ein Werkzeug mit Drehmomentbegrenzung eingesetzt werden. Anderenfalls kann es bei der Demontage der Messkapsel zu unerwünscht langen Demontagezeiten oder sogar zur Zerstörung des Leitungsnetzes kommen, bis der Schraubkopf von dem Leitungsstutzen abgeschraubt und die Messkapsel ausgewechselt werden kann. Die Verwendung eines Montagewerkzeugs ist jedoch zeitaufwendig, so dass sich hierdurch die Montagekosten erhöhen. Ein Werkzeug mit Drehmomentbegrenzung ist zudem relativ teuer.

Ein Drehmomentschlüssel und eine Mutter mit Drehmomentbegrenzung sind z.B. in der Patentschrift US 3,191,486 beschrieben. Der Drehmomentschlüssel und die Mutter mit Drehmomentbegrenzung weisen dabei einen Scherstift auf, welcher bei Erreichen eines bestimmten Drehmomentes abgeschert wird, so dass eine weitere Drehmomentübertragung unterbrochen wird.

Zur Vermeidung einer Drehmomentübertragung auf eine Rohrleitung bei einer Montage bzw. Demontage einer Messkapsel ist es aus dem Dokument DE 299 02 509 U1 bekannt, einen Plombierring zu verwenden. Dieser gewährleistet, dass die Messkapsel aus einem Anschlussgehäuse nur herausgeschraubt werden kann, wenn das Anschlussgehäuse von einem Anschlussstück der Rohrleitung demontiert ist, was sehr aufwendig ist. Das Anschlussgehäuse ist dabei mit Befestigungsschrauben an dem Anschlussstück befestigbar.

In der Patentschrift US 4,995,643 ist eine Anordnung einer Messkapsel beschrieben, bei welcher eine Befestigung der Messkapsel an einer Messkapselaufnahme ohne Verschrauben mittels verrastender und durch einen Überwurfring gesicherter Federlaschen erfolgt. Zur Demontage wird in die Federlaschen durch Schrauben des Überwurfrings gegen an den Federlaschen vorgesehene Nasen eine Kraft in die Federlaschen eingeleitet, welche an einer Sollbruchstelle brechen. Der Montageaufwand ist aufgrund der vorzusehenden verschiedenen Teile hoch.

Der vorliegenden Erfindung liegt daher das technische Problem zugrunde, den technischen Aufwand und die Zeit beim Montieren der Messkapsel an einem Leitungsstutzen oder dgl. zu reduzieren.

Dieses technische Problem wird erfindungsgemäß mit einer Messkapsel gelöst, bei der an der dem Schraubkopf zugewandten Seite der Zählwerkshaube ein Montageanschlag vorgesehen ist, der beim Einschrauben des Schraubkopfes in den Leitungsstutzen an dem Vorsprung des Schraubkopfes angreift, wobei der Montageanschlag ein definiertes Widerstandsmoment gegen Abscheren aufweist, das im Wesentlichen dem gewünschten Montagedrehmoment für die Befestigung der Messkapsel entspricht.

Der Schraubkopf der Messkapsel kann somit in den Leitungsstutzen einer Wasserleitung oder dgl. eingeschraubt werden, indem die mit dem Schraubkopf verbundene Zählwerkshaube ohne Werkzeug manuell in Montagerichtung gedreht wird. Dabei liegt der Montageanschlag der Zählwerkshaube an dem Vorsprung des Schraubkopfes an, so dass durch Drehen der Zählwerkshaube der Schraubkopf mitgedreht und eingeschraubt wird. Bei Erreichen des definierten Widerstandsmoments gegen Abscheren schert der Montageanschlag ab und die Zählwerkshaube ist in dem Schraubkopf drehbar.

Erfindungsgemäß weist der Montageanschlag der Zählwerkshaube ein Widerstandsmoment gegen Abscheren zwischen 5 und 50 Nm, vorzugsweise zwischen 8 und 10 Nm auf. Der Montageanschlag der Zählwerkshaube weist damit im Wesentlichen ein Widerstandsmoment gegen Abscheren auf, das dem üblicherweise verwendeten Montagedrehmoment einer Messkapsel entspricht.

Die Messkapsel kann ohne Werkzeug ordnungsgemäß und mit einem ausreichenden, definierten Montagedrehmoment an dem Leitungsstutzen einer Wasserleitung oder ähnlichem befestigt werden, wobei ausgeschlossen wird, dass der Messkopf durch ein unnötig großes Montagedrehmoment zu fest an dem Leitungsstutzen angebracht wird. Somit wird auch eine leichte Demontage der Messkapsel mit Hilfe eines üblichen Messkapselwerkzeuges gewährleistet.

Gemäß einer bevorzugten Ausführungsform der vorliegenden Erfindung ist an der Zählwerkshaube ein zweiter Anschlag zur Verdrehsicherung angebracht, wie es gemäß PTB-Vorschrift erforderlich ist. Eine derartige Verdrehsicherung ist auch bei herkömmlichen Messkapseln vorhanden. Dieser zweite Anschlag, der als Manipulationssicherungsvorsprung dient, weist vorzugsweise ein Widerstandsmoment gegen Abscheren auf, das kleiner ist als das des Montageanschlags der Zählwerkshaube, und erfüllt die Funktion, ein Zurückdrehen der Zählwerkshaube, durch das der Zählerstand manipulierbar ist, zu verhindern bzw. dem Monteur oder Zählstandsableser deutlich anzuzeigen.

Erfindungsgemäß ist der Vorsprung des Schraubkopfes als radialer Steg ausgebildet, dessen Breite kleiner als der Abstand zwischen den Anschlägen an der Zählwerkshaube ist. Der radiale Vorsprung des Schraubkopfes kann auf diese Weise bei einer Befestigung der Zählwerkshaube in dem Schraubkopf zwischen den beiden Anschlägen der Zählwerkshaube positioniert werden. Der radiale Vorsprung des Schraubkopfes wird dabei so zwischen den beiden Anschlägen der Zählwerkshaube angeordnet, dass bei einer Drehung der Zählwerkshaube in Montagerichtung der Messkapsel, also zum Einschrauben des Gewindeabschnittes des Schraubkopfes in einen Leitungsstutzen, der radiale Vorsprung des Schraubkopfes zuerst an dem Montageanschlag der Zählwerkshaube angreift. Ein definiertes Montieren der Messkapsel über eine manuelle Drehung der Zählwerkshaube ist auf diese Weise bis zum Abscheren des Montagevorsprungs der Zählwerkshaube durch den Vorsprung des Schraubkopfes möglich. Danach lässt sich die Zählwerkshaube in einem Winkelbereich von annähernd 360° frei in dem Schraubkopf der Messkapsel drehen, bis der Verdrehsicherungsanschlag der Zählwerkshaube an dem radialen Vorsprung des Schraubkopfes anschlägt. Somit lässt sich die Zählwerkshaube zur besseren Ablesbarkeit des Zählwerks gut ausrichten.

Die Anschläge der Zählwerkshaube bestehen vorzugsweise aus Kunststoff und sind einstückig mit der Zählwerkshaube ausgebildet. Durch die Verwendung von Kunststoff für die Zählwerkshaube kann eine sichere Funktion der Magnetkupplung gewährleistet werden.

Vorteilhafte Ausführungsformen der vorliegenden Erfindung werden im folgenden unter Bezugnahme auf die beigefügten Zeichnungen rein beispielhaft näher erläutert und beschrieben, in denen:
- Fig. 1: eine schematische Perspektivansicht einer Zählwerkshaube nach einer ersten Ausführungsform der vorliegenden Erfindung ist;
- Fig. 2: eine schematische Perspektivansicht eines Schraubkopfes nach einer ersten Ausführungsform der vorliegenden Erfindung ist;
- Fig. 3: eine schematische Perspektivansicht der noch nicht zusammengesetzten Messkapsel nach einer ersten Ausführungsform der Erfindung ist; und
- Fig. 4: eine schematische Perspektivansicht einer noch nicht zusammengesetzten Messkapsel nach einer zweiten Ausführungsform der vorliegenden Erfindung ist.

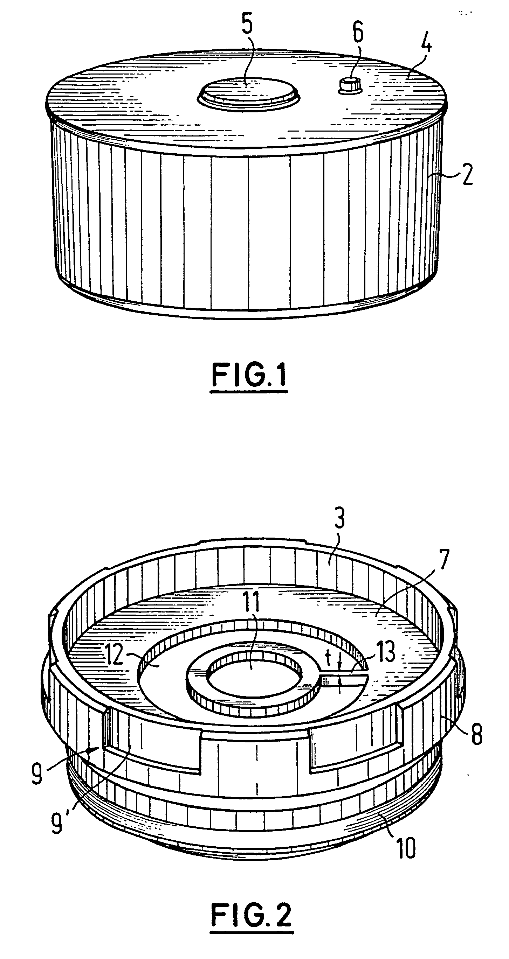

Unter Bezugnahme auf die Fig. 1 bis 3 wird zunächst eine erste Ausführungsform einer erfindungsgemäßen Messkapsel 1 erläutert. Die Messkapsel 1 besteht im Wesentlichen aus einer Zählwerkshaube 2 und einem Schraubkopf 3. Die Zählwerkshaube 2 wird durch einen zylinderförmigen Grundkörper gebildet, der eine in Fig. 1 obere, im Wesentlichen ebene Seite 4 aufweist. In der Mitte der kreisförmigen Seite 4 ist ein ebenfalls kreisförmiger Zentriervorsprung 5 vorgesehen. Weiterhin ist auf der oberen Seite 4 der Zählwerkshaube 2 ein Montageanschlag 6 angeordnet, der einstückig mit der Zählwerkshaube ausgebildet ist.

In Fig. 2 ist der Schraubkopf 3 der Messkapsel 1 schematisch dargestellt. Der Schraubkopf 3 hat ebenfalls eine zylindrische Grundform und weist eine in Fig. 2 nach oben gerichtete, kreisförmige Seite 7 auf. Ein ringförmiger Haltekragen 8 steht von dem äußeren Rand der Seite 7 in Fig. 2 nach oben gerichtet hervor. In einem Eingreifbereich 9 sind an dem Außenumfang des Haltekragens 8 Aussparungen 9' für ein Werkzeug ausgebildet. Auf der der Seite 7 gegenüberliegenden Seite des Schraubkopfes 3 ist ein Außengewinde 10 vorgesehen. In der Mitte der Seite 7 ist eine kreisförmige Ausnehmung 11 ausgebildet. Weiterhin weist die Seite 7 eine ringförmige Ausnehmung 12 auf, die durch einen stegartigen, radialen Vorsprung 13 einer Breite t unterbrochen ist.

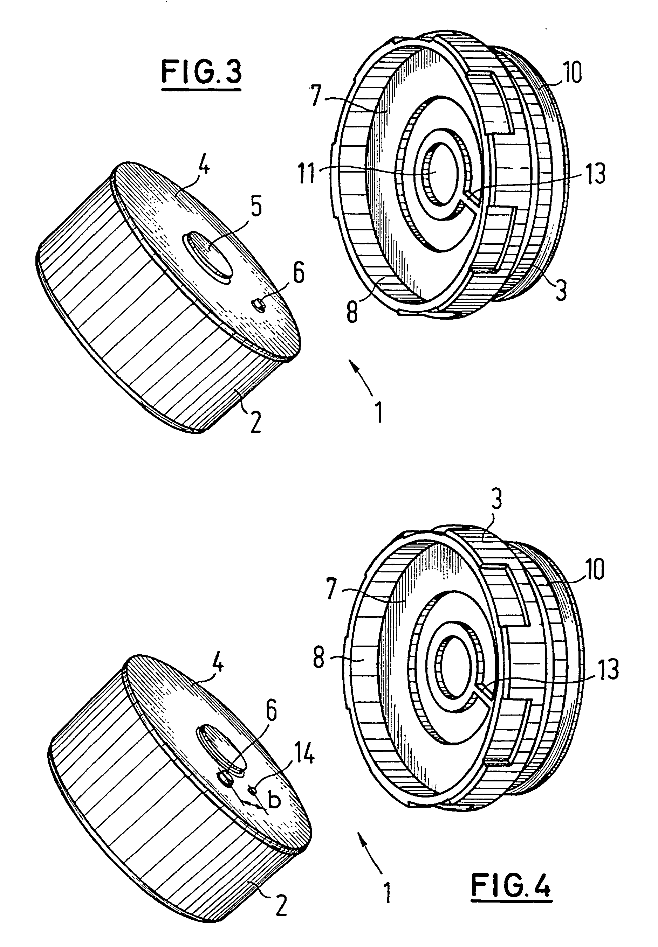

Wie aus der Darstellung von Fig. 3 hervorgeht, kann der Schraubkopf 3 auf die Zählwerkshaube 2 aufgesetzt werden, um so die Messkapsel 1 zu bilden. Die Seite 4 der Zählwerkshaube 2 liegt dabei auf der Seite 7 des Schraubkopfes 3 auf. Der Zentriervorsprung 5 der Zählwerkshaube 2 wird in der kreisförmigen Ausnehmung 11 des Schraubkopfes 3 aufgenommen, während der Haltekragen 8 des Schraubkopfes 3 die Zählwerkshaube 2 zumindest teilweise umgreift. Über eine nicht dargestellte Rasteinrichtung können die Zählwerkshaube 2 und der Schraubkopf 3 so aneinander befestigt werden, dass sie relativ zueinander verdrehbar sind, aber in axialer Richtung aneinander gehalten werden. Der Montageanschlag 6 auf der Seite 4 der Zählwerkshaube 2 ist in der ringförmigen Ausnehmung 12 des Schraubkopfes 3 aufgenommen.

Im Folgenden wird nun die Betriebsweise der ersten Ausführungsform der Messkapsel 1 erläutert. Ist die Zählwerkshaube 2 in den Schraubkopf 3 eingesetzt, so liegt bei einem Drehen der Zählwerkshaube 2 der Montageanschlag 6 der Zählwerkshaube 2 an dem radialen Vorsprung 13 des Schraubkopfes 3 an. Wird die Zählwerkshaube 2 nun weitergedreht, so wird der Schraubkopf 3 mitgedreht. Über das Gewinde 10 des Schraubkopfes 3 kann die Messkapsel 1 so durch manuelles Drehen der Zählwerkshaube 2 in einen nicht dargestellten Leitungsstutzen eingeschraubt werden. Beim Erreichen eines definierten Montagedrehmoments von vorzugsweise 8 bis 10 Nm schert der Montageanschlag 6 ab. Der Schraubkopf 3 ist damit fest in den Leitungsstutzen eingeschraubt, während die Zählwerkshaube 2 frei in dem Schraubkopf 3 drehbar bleibt, um bspw. gut lesbar ausgerichtet zu werden.

Zur Demontage der Messkapsel 1 wird ein Demontagewerkzeug an dem Eingreifbereich 9 des Schraubkopfes 3 angesetzt, um die gesamte Messkapsel 1 mit Zählwerkshaube 2 und Schraubkopf 3 von dem Leitungsstutzen abzuschrauben. Durch das durch das Abscheren des Montageanschlags 6 definierte Montagedrehmoment ist zur Demontage der Messkapsel 1 lediglich ein geringer Kraftaufwand notwendig, so dass sich die Messkapsel 1 leicht abschrauben lässt.

In Fig. 4 ist eine zweite Ausführungsform der vorliegenden Erfindung dargestellt. Während der Schraubkopf 3 in der zweiten Ausführungsform mit dem der ersten Ausführungsform identisch ist, ist an der Seite 4 der Zählwerkshaube 2 ein weiterer Anschlag 14 vorgesehen. Die beiden Anschläge 6 und 14 der Zählwerkshaube 2 sind in Umfangsrichtung voneinander beabstandet und weisen im Wesentlichen den gleichen radialen Abstand zu dem Zentriervorsprung 5 in der Mitte der Seite 4 auf. Der Montageanschlag 6 entspricht dem der ersten Ausführungsform, während der zweite Anschlag 14 der Zählwerkshaube 2 ein Verdrehsicherungsvorsprung ist, der einen kleineren Durchmesser als der Montageanschlag 6 und somit ein geringeres Abscherdrehmoment aufweist. Der Abstand b der beiden Anschläge 6 und 14 der Zählwerkshaube 2 ist dabei so bemessen, dass er größer als die Breite t (siehe Fig. 2) des radialen Vorsprungs 13 des Schraubkopfes 3 ist. Beim Aufsetzen der Zählwerkshaube 2 auf den Schraubkopf 3 wird bei der zweiten Ausführungsform der radiale Vorsprung 13 so ausgerichtet, dass er zwischen den beiden Anschlägen 6 und 14 der Zählwerkshaube positioniert ist.

Bei einer Drehung der Zählwerkshaube 2 relativ zu dem Schraubkopf 3 im Uhrzeigersinn, d.h. in Montagerichtung beim Einschrauben der Messkapsel 1 in einen Leitungsstutzen, kommt der Montageanschlag 6 mit dem radialen Vorsprung 13 der Zählwerkshaube 3 in Eingriff. Eine manuelle Montage der Messkapsel 1 ist also durch ein Drehen der Zählwerkshaube 2 solange möglich, bis der Montageanschlag 6 beim Erreichen des definierten Montagedrehmoments abschert. Die Zählwerkshaube 2 ist nun in einem Bereich von nahezu 360° relativ zu dem Schraubkopf 3 frei drehbar, bis der radiale Vorsprung 13 des Schraubkopfes 3 an dem Manipulationssicherungsvorsprung 14 der Zählwerkshaube 2 anschlägt. Eine Ausrichtung der Zählwerkshaube zur Verbesserung der Ablesbarkeit des in der Zählwerkshaube enthaltenen Zählwerks ist weiterhin möglich, eine Manipulation durch Zurückdrehen der Zählwerkshaube dagegen nicht, da dann der Manipulationssicherungsvorsprung 14 durch den radialen Vorsprung 13 des Schraubkopfes 3 abgeschert wird. Auf diese Weise erhält man ein deutlich sichtbares Anzeichen, wenn versucht wird, die Messkapsel 1 zu manipulieren.

Die Demontage der in Fig. 4 dargestellten Messkapsel 1 erfolgt, wie bereits unter Bezugnahme auf die erste Ausführungsform erläutert, über ein an dem Eingreifbereich 9 des Schraubkopfes 3 angreifendes Demontagewerkzeug.

### Bezugszeichenliste:

- 1: Messkapsel
- 2: Zählwerkshaube
- 3: Schraubkopf
- 4: obere Seite der Zählwerkshaube 2
- 5: Zentriervorsprung
- 6: Montageanschlag
- 7: obere Seite des Schraubkopfes 3
- 8: Haltekragen
- 9: Eingreifbereich
- 10: Aussparung
- 11: kreisförmige Ausnehmung
- 12: ringförmige Ausnehmung
- 13: radialer Vorsprung
- 14: Verdrehsicherungsanschlag

- b: Abstand zwischen den Anschlägen 6 und 14
- t: Breite des Vorsprungs 13

## Patentansprüche

1. Messkapsel, insbesondere für Wasserzähler, mit einem Schraubkopf (3) zur Befestigung der Messkapsel (1) an einem Leitungsstutzen oder dgl. und einer Zählwerkshaube (2), die in den Schraubkopf (3) einsetzbar ist und drehbar an diesem gehalten wird, wobei der Schraubkopf (3) an der der Zählwerkshaube (2) zugewandten Seite (4, 7) einen als Verdrehsicherung dienenden Vorsprung (13) aufweist, **dadurch gekennzeichnet, dass** an der dem Schraubkopf (3) zugewandten Seite der Zählwerkshaube (2) ein Montageanschlag (6) vorgesehen ist, der beim Einschrauben des Schraubkopfes (3) in den Leitungsstutzen an dem Verdrehsicherungsvorsprung (13) angreift, und **dass** der Montageanschlag (6) ein definiertes Widerstandsmoment gegen Abscheren aufweist.

2. Messkapsel nach Anspruch 1, **dadurch gekennzeichnet, dass** der Montageanschlag (6) der Zählwerkshaube (2) ein Widerstandsmoment gegen Abscheren zwischen 5 und 50 Nm, vorzugsweise zwischen 8 und 10 Nm aufweist.

3. Messkapsel nach einem der vorhergehenden Ansprüche, **dadurch gekennzeichnet, dass** an der Zählwerkshaube (2) ein zweiter Anschlag (14) zur Verdrehsicherung vorgesehen ist.

4. Messkapsel nach Anspruch 3, **dadurch gekennzeichnet, dass** der Verdrehsicherungsanschlag (14) ein geringeres Widerstandsmoment gegen Abscheren als der Montageanschlag (6) aufweist.

5. Messkapsel nach einem der vorhergehenden Ansprüche, **dadurch gekennzeichnet, dass** der Vorsprung (13) des Schraubkopfes (3) als radialer Steg ausgebildet ist, der vorzugsweise in einer umlaufenden Ausnehmung (12) in der der Zählwerkshaube (2) zugewandten Seite (7) des Schraubkopfes (3) vorgesehen ist.

6. Messkapsel nach Anspruch 3 und 5, **dadurch gekennzeichnet, dass** die Breite (t) des Steges kleiner ist als der Abstand (b) zwischen den Anschlägen (6, 14) der Zählwerkshaube (2).

7. Messkapsel nach Anspruch 3 und einem der Ansprüche 4 bis 6, **dadurch gekennzeichnet, dass** der Vorsprung (13) des Schraubkopfes (3) zwischen den Anschlägen (6, 14) der Zählwerkshaube (2) angeordnet ist.

8. Messkapsel nach Anspruch 3 und einem der Ansprüche 4 bis 7, **dadurch gekennzeichnet, dass** der Montageanschlag (6) und/oder der Verdrehsicherungsanschlag (14) der Zählwerkshaube (2) aus Kunststoff bestehen.

9. Messkapsel nach Anspruch 3 und einem der Ansprüche 4 bis 8, **dadurch gekennzeichnet, dass** der Montageanschlag (6) und/oder der Verdrehsicherungsanschlag (14) der Zählwerkshaube (2) einstückig mit der Zählwerkshaube (2) ausgebildet sind.

## Claims

1. A measuring capsule, in particular for a water meter, with a screw head (3) for fastening the measuring capsule (1) to a pipe nozzle or the like, and a meter housing (2) which can be inserted into the screw head (3) and is rotatably secured thereon, wherein the screw head (3) has a projection (13) which is located on the side (4, 7) facing the meter housing (2) and serves as rotation lock, **characterized in that** on the meter housing's (2) side facing the screw head (3), a mounting lug (6) is provided which, when screwing the screw head (3) into the pipe nozzle, engages with the rotation lock projection (13), and that the mounting lug (6) has a defined moment of resistance against shearing.

2. The measuring capsule according to claim 1, **characterized in that** the mounting lug (6) of the meter housing (2) has a moment of resistance against shearing between 5 and 10 Nm, preferably between 8 and 10 Nm.

3. The measuring capsule according to any one of the preceding claims, **characterized in that** on the meter housing (2), a second lug (14) for locking against rotation is provided.

4. The measuring capsule according to claim 3, **characterized in that** the rotation lock lug (14) has a lower moment of resistance against shearing than the mounting lug (6).

5. The measuring capsule according to any one of the preceding claims, **characterized in that** the projection (13) of the screw head (3) is formed as radial web which is preferably provided in a circumferential recess (12) in the screw head's (3) side facing the meter housing (2).

6. The measuring capsule according to claim 3 and claim 5, **characterized in that** the width (t) of the web is smaller than the distance (b) between the lugs (6, 14) of the meter housing (2).

7. The measuring capsule according to claim 3 and any one of the claims 4 to 6, **characterized in that** the projection (13) of the screw head (3) is arranged between the lugs (6, 14) of the meter housing (2).

8. The measuring capsule according to claim 3 and any one of the claims 4 to 7, **characterized in that** the mounting lug (6) and/or the rotation lock lug (14) of the meter housing (2) consist of plastic.

9. The measuring capsule according to claim 3 and any one of the claims 4 to 8, **characterized in that** the mounting lug (6) and/or the rotation lock lug (14) of the meter housing (2) is formed as one piece with the meter housing (2).

## Revendications

1. Capsule de mesure, en particulier pour compteur d'eau, comprenant une tête de vissage (3) pour la fixation de la capsule de mesure (1) sur une tubulure de conduite ou similaire et un capot de compteur (2), qui peut être inséré dans la tête de vissage (3) et est maintenu de façon rotative sur celle-ci, la tête de vissage (3) présentant une partie saillante (13) servant de sécurité anti-torsion (13) sur le côté (4, 7) tourné vers le capot de compteur (2), **caractérisé en ce qu'**il est prévu sur le côté, tourné vers la tête de vissage (3), du capot de compteur (2) une butée de montage (6) qui s'applique lors du vissage de la tête de vissage (3) dans la tubulure de conduite sur la saillie de sécurité anti-torsion (13) et **en ce que** la butée de montage (6) présente un moment de résistance défini contre le cisaillement.

2. Capsule de mesure selon la revendication 1, **caractérisé en ce que** la butée de montage (6) du capot de compteur (2) présente un moment de résistance contre le cisaillement entre 5 et 50 Nm, de préférence entre 8 et 10 Nm.

3. Capsule de mesure selon l'une quelconque des revendications précédentes, **caractérisée en ce qu'**une deuxième butée (14) est prévue sur le capot de compteur (2) pour la sécurité anti-torsion.

4. Capsule de mesure selon la revendication 3, **caractérisé en ce que** la butée de la sécurité anti-torsion (14) présente un moment de résistance contre le cisaillement plus faible que la butée de montage (6).

5. Capsule de mesure selon l'une quelconque des revendications précédentes, **caractérisée en ce que** la saillie (13) de la tête de vissage (3) est connue sous forme de barrette qui est prévue de préférence dans un évidement (12) périphérique dans le côté (7), tourné vers le capot de compteur (2), de la tête de vissage (3).

6. Capsule de mesure selon les revendications 3 et 5, **caractérisée en ce que** la largeur (t) de la nervure est inférieure à la distance (b) entre les butées (6, 14) du capot de compteur (2).

7. Capsule de mesure selon la revendication 3 et l'une quelconque des revendications 4 à 6, **caractérisée en ce que** la saillie (13) de la tête de vissage (3) est disposée entre les butées (6, 14) du capot de compteur (2).

8. Capsule de compteur selon la revendication 3 et l'une quelconque des revendications 4 à 7, **caractérisée en ce que** la butée de montage (6) et/ou la butée de sécurité anti-torsion (14) du capot de compteur (2) sont en plastique.

9. Capsule de mesure selon la revendication 3 et l'une quelconque des revendications 4 à 8, **caractérisée en ce que** la butée de montage (6) et/ou la butée de sécurité anti-torsion (14) du capot de compteur (2) sont conçus d'une seule pièce avec le capot de compteur (2).
